# EUROPEAN PATENT SPECIFICATION

(11) **EP 1 264 813 B1**
(45) Date of publication and mention of the grant of the patent: **16.05.2007**
(21) Application number: 01912296.9
(22) Date of filing: 13.03.2001
(51) Int. Cl.: C06D 5/00, B60R 21/26, C06C 9/00, C06D 5/06

(54) **GAS GENERATOR WITH AUTOMATIC FIRING FUNCTION**
GASERZEUGER MIT AUTOMATISCHER ZÜNDFUNKTION
GENERATEUR DE GAZ A MISE DE FEU AUTOMATIQUE

(30) Priority: 15.03.2000 JP 2000071538
(43) Date of publication of application: 11.12.2002
(73) Proprietor: DAICEL CHEMICAL INDUSTRIES, LTD., Sakai-shi, Osaka 590-8501 (JP)
(72) Inventor: YAMATO, Yo, Himeji-shi, Hyogo 671-1234 (JP); WU, Jianzhou, Himeji-shi, Hyogo 671-1212 (JP); TAKAHORI, Takeshi, Himeji-shi, Hyogo 671-1262 (JP)
(74) Representative: Grünecker, Kinkeldey, Stockmair & Schwanhäusser Anwaltssozietät
(86) International application number: PCT/JP2001/001944
(87) International publication number: WO 2001/068564

(56) References cited:
- JP-A- 7 232 989
- US-A- 4 561 675
- US-A- 5 380 380
- US-A- 5 959 242

## Description

### Technical Field to which the Invention belongs

The present invention relates to a gas generator for an air bag in which a gas generating agent has an automatic igniting function so that it is unnecessary to use a material having an automatic igniting function separately. The closest prior art is represented by US-A-4 561 675 which has an igniter material wich is stable for long duration, may be ten(10) years or more, at temperatures up to 121°C.

An air bag system which is mounted on various kinds of vehicles and the like including automobiles, aims to hold a passenger by means of an air bag (a bag body) rapidly inflated by a gas when the vehicle collides at a high speed so as to prevent the passenger from crashing into a hard portion inside the vehicle such as a steering wheel, a windshield due to an inertia and from getting injured. Such an air bag system generally comprises a gas generator which is actuated due to a collision of the vehicle to burn a gas generating agent and discharge a gas, and an air bag in which the gas is introduced to be inflated. The gas generating agent in this gas generator is burnt directly or through combustion of an enhancer agent (a transfer charge) by activation of a mechanical or electrical igniting means due to actuation of the system based upon an instruction of a sensor detecting the impact at a time of collision.

In this manner, since the gas generator is actuated due to a collision of a vehicle, it is not actuated when such an emergency situation as a vehicle fire which is not caused by a vehicle collision. Therefore, in case that the ambient temperature of the gas generator rises to a temperature equal to or more than an ignition temperature of the gas generating agent, there is a risk such that the gas generating agent ignites and burns (explodes). At this time, in case that a thermal stability of an outer shell container of the gas generator is low and the ignition temperature of the gas generating agent is high, the strength of the outer shell container is reduced by deformation of the container due to rising of the ambient temperature or the like. Thereafter, when the gas generating agent explodes, there is a risk such that the outer shell container is broken and scattered by an explosive pressure so that a human body may be injured.

In order to avoid such an event and secure a safety, conventionally, a material having an automatic igniting function (an automatic igniting material), which automatically ignites according to rising of the ambient temperature without association of a mechanical or electrical igniting means, i.e., without actuation of the gas generator is arranged in the transfer charge. For example, nitrocellulose (ignition temperature: 170°C) is conventionally used as the automatic igniting material, and, in a case of a vehicle fire or the like, nitrocellulose automatically ignites at a temperature lower than a temperature at which the strength of the outer shell container of the gas generator is lowered, and it burns the transfer charge and simultaneously burns the gas generating agent.

However, since nitrocellulose has a poor thermal stability, there is a possibility that it is decomposed and degraded while a long term elapses (indicating the life of a vehicle which will be normally between several years to ten and some years), so that the automatic igniting function does not develop. Also, in case that the automatic igniting material is used, since increase in weight of the gas generator or increase in manufacturing cost occurs due to such a use of the material, there is a room for improvement in view of such a point.

### Disclosure of the Invention

An object of the present invention is to provide a gas generator for an air bag which can secure a safety in such an emergency situation as a vehicle fire while maintaining an automatic igniting function even after a long term elapsed and in which a weight is reduced and a manufacturing cost isi restricted can be achieved.

The present invention has solved the above problem by the features of claim 1 and 6, respectively, imparting an automatic igniting function to a gas generating agent itself instead of arranging an automatic igniting material such as nitrocellulose separately in a conventional manner. That is, the present invention defined by the claims is to provide a gas generator for an air bag using a gas generating agent having an automatic igniting function in which a mechanical or electrical igniting means does not participate.

The expression "an automatic igniting function in which a mechanical or electrical igniting means does not participate" in the present invention means a function of natural igniting due to rising of an ambient temperature. Here, the expression "an firing ambient temperature (i.e., corresponding to an igniting temperature of a gas generating agent)" means a temperature at which the above problem can be solved in relation to a gas generator for an air bag, particularly, an outer shell container (a housing), specifically, it means such a temperature at which the strength of the outer shell container of the gas generator for an air bag is not lowered. Incidentally, when "an automatic igniting function" is expressed in the following description, it means "an automatic igniting function in which a mechanical or electrical igniting means does not participate".

In case that a gas generator is of pyrotechnic type in which a gas supplying source is only a gas generating agent, "a gas generator for an air bag" according to the present invention can be applied not only to a gas generator for an air bag for a driver side air bag of various vehicles, a gas generator for an air bag for a passenger side next to the driver, a gas generator for a side collision air bag but also to a gas generator for an inflatable curtain air bag, a gas generator for a knee-bolster air bag, a gas generator for an inflatable seat belt, a gas generator for a tubular system and a gas generator for a pretensioner.

A desirable gas generating agent used in the present invention is one such that, after it held at 110°C for 400 hours, a weight reduction ratio is 2.0 weight % or less, preferably, 1.0 weight % or less, more preferably 0.5 weight % or less, and that an automatic igniting function is maintained after the gas generating agent is held under the above condition.

As the gas generating agent used in this invention, it is desirable to use one having an ignition temperature of preferably 200°C or less, more preferably, 200 to 175°C.

As the gas generating agent used in this invention, it is desirable that one includes a guanidine derivatives and a basic metal nitrate, or it includes a guanidine derivatives, a basic metal nitrate and an additive.

The gas generator for an air bag of the present invention can be enhanced in safety and reliability because the gas generating agent has the automatic igniting function and the function is not deteriorated for a long term.

### Brief Description of the Drawings

Fig. 1 is a vertical cross sectional view of one embodiment of a gas generator for an air bag of the present invention.
Fig. 2 is a vertical cross sectional view of another embodiment of a gas generator for an air bag of the present invention.

### Preferred Embodiments of the Invention

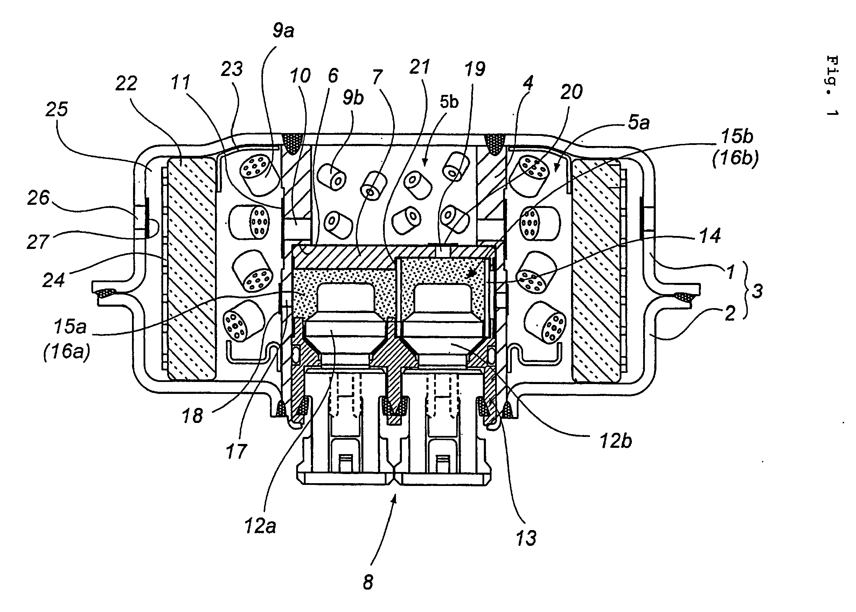

First, one embodiment of the present invention will be explained with reference to Fig. 1. Fig. 1 is a vertical cross sectional view of a gas generator for an air bag of the present invention, and particularly it has a structure suitable to be arranged on a driver side.

The gas generator comprises a housing 3 which is formed by joining a diffuser shell 1 having a gas discharge port(s) and a closure shell 2 forming an inner accommodating space with the diffuser shell, a substantially cylindrical inner cylindrical member 4 arranged inside the housing and a first combustion chamber 5a formed in the outer side of the inner cylindrical member 4.

Further, a stepped notch portion 6 is provided inside the inner cylindrical member 4, a partition wall 7 in shape of a substantially flat disk is arranged in the stepped notch portion 6, and the partition wall further partitions the inside of an inner cylindrical member 4 into two chambers to form a second combustion chamber 5b in the diffuser shell side and an ignition means accommodating chamber 8 in the closure shell side, respectively.

As a result, in the gas generator, the first combustion chamber 5a and the second combustion chamber 5b are concentrically provided in the housing 3, being adjacent to each other in the radial direction of the housing. Gas generating agents 9a, 9b which is to be burnt by a ignition means activated upon the impact for generating a combustion gas are stored in the first and second combustion chambers, respectively, and the ignition means to be actuated upon the impact is stored in the ignition means accommodating chamber 8.

A through-hole 10 is provided in the inner cylindrical member 4 which defines the first combustion chamber 5a and the second combustion chamber 5b, and the through-hole is closed by a seal tape 11. The seal tape 11 is ruptured when the gas generating agent is burnt, and thereby, both the combustion chambers can communicate with each other through the through-hole 10. It is necessary to adjust a material and a thickness of the seal tape 11 such that the seal tape 11 is not ruptured by the combustion of the gas generating agent 9a in the first combustion chamber 5a but it is ruptured by the combustion of the gas generating agent 9b in the second combustion chamber 5b. In the present embodiment, a stainless steel seal tape having a thickness of 40 µm is used. Further, an opening area of the through-hole 10 is larger than that of a gas discharge port 26, and the through-hole 10 does not have a function for controlling an internal pressure of the combustion chamber 5b.

In the present invention, the ignition means accommodating chamber 8 is made of a space between an initiator collar 13 and the partition wall 7, and a substantially cylindrical separating cylinder 14 is arranged to surround one igniter 12b (hereinafter, referred to as "a second igniter"), a first transfer-charge accommodating chamber 15a is defined in the outer side thereof and a second transfer-charge accommodating chamber 15b is defined in the inner side thereof, respectively, and the igniters 12a and 12b, and the transfer charges 16a and 16b which constitute the ignition means together with the igniters are stored in the respective accommodating chambers. In this embodiment, there is no space inside the ignition means accommodating chamber 8 except for the respective transfer charge accommodating chambers. As a result, the ignition means accommodating chamber 8 is partitioned into two chambers which are the first transfer charge accommodating chamber 15a and the second transfer charge accommodating chamber 15b. And the transfer charges 16a and 16b which constitute the ignition means together with the igniters are securely separated and allocated to the respective igniters 12a and 12b.

When the transfer charge 16a in the first transfer charge accommodating chamber 15a is burnt, the seal tape 18 closing the flame-transferring hole 17 formed in the inner cylindrical member 4 is ruptured, so that the first transfer charge accommodating chamber 15a communicates with the first combustion chamber 5a to ignite and burn the porous gas generating agent 9a. When the transfer charge 16b in the second transfer charge accommodating chamber 15b is burnt, the seal tape 20 closing the flame-transferring hole 19 formed in the partition wall 7 is ruptured, so that the second transfer charge accommodating chamber 15b communicates with the second combustion chamber 5b to ignite and burn the single perforated gas generating agent 9b. A combustion gas generated in the second combustion chamber 9b flows into the first combustion chamber 5a through the through-hole 10 provided in the diffuser shell 1 side of the inner cylindrical member 4. Accordingly, in this gas generator, at activation, a flame, which is generated due to ignition and combustion of the first igniter 12a, ignites and burns the transfer charge 16a in the accommodating chamber 15a and then, the flame thereof passes through the flame-transferring hole 17 formed in the inner cylindrical member 4 to ignite and burn a gas generating agent 9a with seven holes stored in the first combustion chamber 5a positioned in the radial direction of the chamber 15a.

Particularly, in the gas generator shown in Fig. 1, the second igniter 12b and the first igniter 12a can be simultaneously ignited in order to stabilize an operation performance, however, the former 12b is never ignited earlier than the latter 12a. That is, the gas generating agent 9b stored in the second combustion chamber 5b burns simultaneously with or with a delay from the gas generating agent 9a stored in the first combustion chamber 5a. When the gas generating agent 9a in the first combustion chamber 5a burns earlier than the second gas generating agent 9b does, the seal tape 11 is not broken by combustion of the first gas generating agent 9a but it is broken only by combustion of the second gas generating agent 9b.

Also, in the gas generator shown in Fig. 1, a separating cylinder 14 disposed between the initiator collar 13 and the partition wall 7 is arranged in such a manner that a hole portions corresponding to an outer shape of the separating cylinder 14 are provided on the lower surface of the partition wall 7 and the upper surface of the initiator collar 13, respectively, and the upper end and the lower end of the separating cylinder 14 are fitted into the respective hole portions. By arranging the separating cylinder 14 in this manner, a flame of the transfer charge generated in either of the transfer charge combustion chambers never burns directly the transfer charge in the other transfer charge accommodating chamber, and the gas generating agents stored in two combustion chambers are respectively ignited and burnt by flames generated by the combustions of the transfer charges in the different sections. Namely, in general, when the transfer charge burns in the separating cylinder 14 (that is, in the second transfer charge accommodating chamber), a pressure of a gas generated by the combustion expands the separating cylinder 14 in the radial direction. Nonetheless, because the separating cylinder 14 is disposed to be supported firmly at the upper and lower end portions by a curcumferential walls of the respective hole portions into which the end portions are fitted, a leakage of a combustion gas and a flame can be blocked more securely compared with a case such that the separate cylinder 14 is simply held between the partition wall 7 and the initiator collar 13.

The ignition means includes two electric ignition type igniters (12a and 12b) to be activated by the activating signal outputted on the basis of detection of the impact by the sensor, and the igniters are provided in parallel to each other in one initiator collar 13, having head portions thereof protruded. As mentioned above, by fixing two igniters to one initiator collar 13, two igniters fixed to the initiator collar become a single member, thereby facilitating an assembly to the gas generator. In particular, in the gas generator shown in this drawing, the initiator collar 13 is made in a size capable of being inserted into the inner cylindrical member 4, and thereby, the igniters are easily and securely fixed by crimping the lower end of the inner cylindrical member 4 to fix the initiator collar 13 after inserting the initiator collar 13 provided with two igniters (12a and 12b) into the inner cylindrical member 4. Further, when arranging two igniters (12a and 12b) in the initiator collar 13, a direction of each igniter can be easily controlled.

Further, a coolant/filter 22 for purifying and cooling the combustion gas generated by the combustion of the gas generating agents (9a and 9b) is disposed in the housing 3, an inner peripheral surface in the diffuser shell 1 side thereof is covered with a short-pass preventing member 23 so that a combustion gas does not pass between an end surface of the coolant/filter 22 and an inner surface of a ceiling portion in the diffuser shell 1.

An outer layer 24 for preventing the coolant/filter 22 from expanding outwardly due to passing of a combustion gas or the like is arranged on the outer side of the coolant/filter 22. The outer layer 24 is, for example, formed by using a layered wire mesh body, and in addition, may be formed by using a porous cylindrical member having a plurality of through-holes on a peripheral wall surface or a belt-like suppressing layer obtained by forming a belt-like member with a predetermined width into an annular shape.

A gap 25 is further formed on the outer side of the outer layer 24 so that a combustion gas can pass through the entire surface of the filter 22. The gas discharge port 26 formed in the diffuser shell 1 is closed by a seal tape 27 for blocking outer air from entering. This seal tape 27 is ruptured when discharging a gas. The seal tape 27 aims to protect the gas generating agent from outside moisture, and it does not influence performance adjustments such as an internal combustion pressure at all.

In the invention the gas generating agents 9a and 9b, one including (a) guanidine nitrate or nitroguanidine (NQ) and (b) basic copper nitrate, or one including (a) guanidine nitrate or nitroguanidine (NQ), (b) basic copper nitrate and (c) additives is used. Incidentally, in this embodiment, since the seal tape 11 is ruptured only by the combustion of the gas generating agent 9b, the gas generating agent 9b must be a gas generating agent having the above-described automatic igniting function, but the gas generating agent 9a may or may not have the automatic igniting function.

In the inventive alternative when the gas generating agent includes nitroguanidine and basic copper nitrate, the contents are (a) nitoguanidine of 30 to 70 weight % and (b) basic copper nitrate of 30 to 70 weight %.

As the additives of the component (c), at least one selected from the group consisting of carboxymethyl cellulose (CMC), carboxymethyl cellulose sodium salt (CMCNa), carboxymethyl cellulose potassium salt, carboxymethyl cellulose ammonium salt, cellulose acetate, cellulose acetate butyrate (CAB), methyl cellulose (MC), ethyl cellulose (EC), hydroxyethyl cellulose (HEC), ethyl hydroethyl cellulose (EHEC), hydroxypropyl cellulose (HPC), carboxymethylethyl cellulose (CMEC), microcrystalline cellulose, polyacrylamide, aminated polyacrylamide, polyacrylic hydrazine, acrylamide-acrylic acid metal salt copolymer, copolymer of polyacrylamide and polyacrylate ester compound, polyvinyl alcohol, acrylic rubber, guar gum, starch, silicone, molybdenum disulfide, Japanese acid clay, talc, bentonite, diatomaceous earth, kaolin, calcium stearate, silica, alumina, sodium silicate, silicon nitride, silicon carbide, hydrotalsite, mica, metal oxide, metal hydroxide, metal carbonate, basic metal carbonate, and molybdate is proposed.

As the metal oxide of the compound (c), at least one selected from the group consisting of copper oxide, iron oxide, zinc oxide, cobalt oxide, manganese oxide, nickel oxide, and bismuth oxide can be proposed. As the metal hydroxide, at least one selected from the group consisting of cobalt hydroxide and aluminum hydroxide can be proposed, and as the metal carbonate and basic metal carbonate, at least one selected from the group consisting of calcium carbonate, cobalt carbonate, basic zinc carbonate, basic copper carbonate, basic cobalt carbonate, basic iron carbonate, basic bismuth carbonate, and basic magnesium carbonate can be proposed. As the molybdate, at least one selected from the group consisting of cobalt molybdate and ammonium molybdate. The compounds of these components (c) can serve as a slag-forming agent and/or a binder.

In case that the ignition performance of the gas generating agent is increased, carboxymethyl cellulose sodium salt and carboxymethyl cellulose potassium salt are preferable, and among them the sodium salt is more preferable.

One embodiment of a case such that the gas generating agent includes the components (a), (b) and (c) can include components containing (a) nitroguanidine, (b) basic copper nitrate, and (c) carboxymethyl cellulose sodium salt. In this case, preferably, the contents are (a) nitroguanidine of 15 to 55 weight %, (b) basic copper nitrate of 45 to 70 weight %, and (c) carboxymethyl cellulose sodium salt of 0.1 to 15 weight %.

Another preferable embodiment of a case such that the gas generating agent includes the (a), (b) and (c) components can include one containing (a) nitroguanidine, (b) basic copper nitrate, and (c) guar gum. In this case, it is preferable that the contents are (a) nitroguanidine of 20 to 60 weight %, (b) basic copper nitrate of 35 to 75 weight %, and (c) guar gum of 0.1 to 10 weight %.

The gas generating agent can be formed in a desired shape, and it is formed in a single-perforated cylindrical, a porous cylindrical or a pellet-shaped molded material. These molded materials an be produced by a method comprising steps of adding and mixing water or organic solvent into a gas generating agent and extrusion-molding (the single hole cylindrical and porous cylindrical molds) or a method comprising steps of performing compression-molding using a pelletizer or the like (the pellet-shaped molded material).

In the gas generator of the present embodiment, the transfer charges (enhancer agents) 16a and 16b and the gas generating agents 9a and 9b are burnt to generate a gas in a normal actuation time, as described below.

In the gas generator of the present embodiment, the first igniter 12a disposed inside the ignition means accommodating chamber 8 but outside the separating cylinder 14 is activated, the transfer charge 16a stored in the first transfer charge accommodating chamber 15a is ignite/burnt, and its flame passes through the flame-transferring hole 17 of the inner cylindrical member 4 to burn the porous cylindrical first gas generating agent 9a having seven holes stored in the first combustion chamber 5a.

Also, when the second igniter 12b surrounded by the separating cylinder 14 is activated simultaneously with or with delay from the first igniter 12a, the transfer charge 16b stored in the second transfer charge accommodating chamber 15b is ignited/burnt, and its flame ignites/burns the single-perforated cylindrical second gas generating agent 9b stored in the second combustion chamber 5b.

As a result, the output form (operation performance) of the gas generator can arbitrarily be adjusted by adjusting the ignition timing of two igniters (12a and 12b), in other words, by making the second igniter activated after activation of the first igniter or by making the first igniter and the second igniter activated simultaneously. And further, in various situations such as a speed of a vehicle at a time of collision and an environment temperature, the development of an air bag can be made most optimal when an air bag apparatus described later is formed.

Particularly in the gas generator shown in this drawing, the gas generating agents (9a and 9b) with different shapes are used for the respective combustion chambers (5a and 5b), in which the porous cylindrical first gas generating agent 9a and the single-perforated cylindrical second gas generating agent 9b are respectively stored in the first combustion chamber 5a and the second combustion chamber 5b. Also, the amounts of the gas generating agents stored in the respective combustion chambers (5a and 5b) are different from each other, in which the gas generating agents (9a and 9b) of 35 g and 6 g are respectively stored in the first combustion chamber 5a and the second combustion chamber 5b. As a result, in this gas generator, it is possible to adjust the output form more accurately.

Further, in the gas generator of the embodiment, the transfer charges (the enhancer agents) 16a and 16b and the gas generating agents 9a and 9b are burnt to secure a safety in an emergency situation such as a vehicle fire or the like.

When the ambient temperature of the gas generator rises due to a vehicle fire or the like, and when the ambient temperature reaches the ignition temperature (for example, about 200°C) of the gas generating agent 9b, the gas generating agent 9b ignites and burns. According thereto, the seal tapes 11 and 20 are ruptured to burn the gas generating agent 9a and the transfer charge 16b, and further, according to the combustion of the gas generating agent 9a, the seal tape 18 is ruptured to burn the transfer charge 16a. This is a case when only the gas generating agent 9b has the automatic igniting function. When the gas generating agent 9a also has the automatic igniting function, the gas generating agents 9a and 9b are automatically ignited together to burn the transfer charges 16a and 16b. Accordingly, even when a material having a low melting point such as aluminum (about 660°C) is used as a housing material, since the gas generating agents and the transfer charges burns before the strength of the housing is lowered, the housing itself is prevented from being ruptured and scattering due to the combustion of the gas generating agent, due to that the gas generating agent reaches its ignition temperature at last after the strength of the housing has been lowered due to a high temperature.

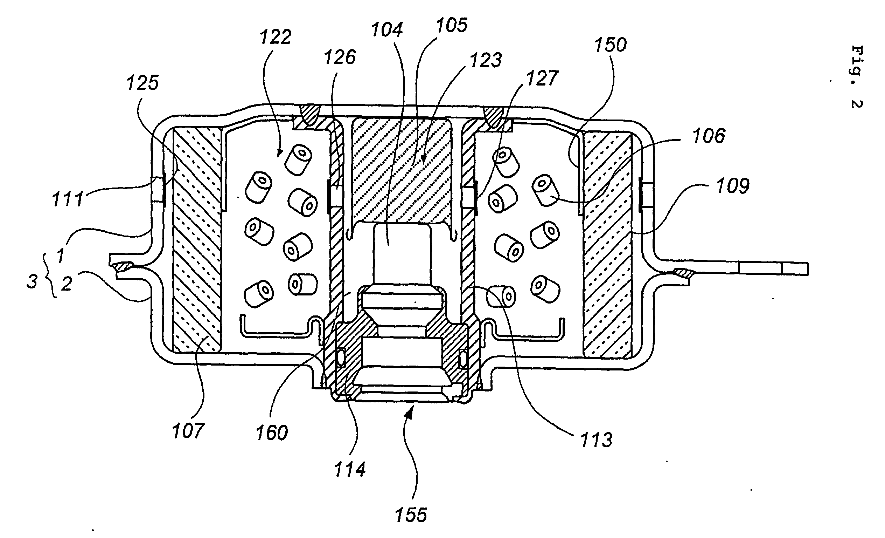

Next, another embodiment of the present invention will be explained with reference to Fig. 2. Fig. 2 is a vertical sectional view of a gas generator for an air bag of the present invention, showing a structure which is particularly suitable for being arranged in a driver side. This embodiment is a gas generator including one combustion chamber.

This gas generator comprises, in a housing 3 which is formed by joining a diffuser shell 1 having gas discharge ports and a closure shell 2 forming an inner accommodating space with the diffuser shell, an inner cylindrical member 113 formed in a substantially cylindrical shape, a combustion chamber 122 defined in the outer side of the inner cylindrical member and an ignition means accommodating chamber 155 defined in the inner side thereof. As a result, in this gas generator, the combustion chamber 122 and the ignition means accommodating chamber 155 are concentrically provided in the housing 3, and arranged adjacent to each other in the radial direction of the housing. A gas generating agent 106 which is to be burnt by an ignition means activated upon the impact for generating a combustion gas is stored in the combustion chamber, and the ignition means to be actuated upon the impact is stored in the ignition means accommodating chamber 155. An igniter 104 is disposed in the ignition means accommodating chamber 155 via an initiator collar 114, a transfer charge 105 is stored in a transfer means accommodating chamber 123, and the remaining space 160 exists in the ignition means accommodating chamber 155. In Fig. 2, numeral 107 denotes a coolant/filter, 109 denotes a clearance, 111 denotes a gas discharge hole, 125 denotes a seal tape, 126 denotes a communication hole, and 150 denotes a short pass preventing member.

In the present embodiment, a gas generating agent having an automatic igniting function as described above is used as the gas generating agent 106. Accordingly, in an emergency situation such as a vehicle fire, the gas generating agent 106 automatically ignites due to rising of the ambient temperature. Since the combustion temperature of the gas generating agent is as high as about 2000°C, the enhancer agent or the igniting agent ignites/burns due to the combustion heat with a delay from the combustion of the gas generating agent.

### Example

The present invention will be further explained below in detail according to examples, but it is not limited by these examples.

### (1) Weight Loss Ratio

40 g of the gas generating agent (incidentally, only a fuel) was put into a container made of an aluminum, and the total weight was measured, so that (the total weight - the weight of the aluminum container) was set as a sample weight before test. After the aluminum container containing the sample was put into an SUS thick container (the content volume: 118.8 ml) and a lid was applied to the container, this container was put into a thermostat bath of 110°C. At this time, the container was sealed by using a rubber packing and a clamp. After a predetermined period elapsed, the SUS thick container was taken out from the thermostat bath, the lid was opened after the temperature of the SUS thick container returned back to the room temperature, and the aluminum container was taken out therefrom. The total weight including the aluminum container was measured and the sample weight after the test was obtained from (the total weight - the weight of the aluminum-made container). Then, a thermal stability was evaluated by comparing the weight changes of the sample before and after test to obtain a weight reduction ratio. The weight loss ratio was obtained from [(the weight of the gas generating agent before test - the weight of the gas generating agent after test)/the weight of the gas generating agent before test] × 100.

### Example 1

A gas generating agent with a composition comprising nitroguanidine/ basic copper nitrate/guar gum = 44.2/52.8/3.0 (weight %) was produced, and its ignition temperature and weight loss ratio were measured. The ignition temperature was measured by a Krupp type ignition temperature tester and the measured value was indicated by a 60 seconds ignition temperature. As a result, the ignition temperatures were 193°C in case of a gas generating agent put in a crushed state (a crushed agent) and 201°C in case of the gas generating agent put in an extrusion-molded state (an extruded agent), and the weight loss ratios were 0.27% when 214 hours passed at 110°C and 0.45% when 408 hours passed at 110°C.

As apparent from this result, since the ignition temperature of the gas generating agent used in the gas generator of the present invention is low, it is clear that the gas generating agent automatically ignites before the housing is degraded due to heat in case of a vehicle fire. Further, as apparent from the fact that the weight loss ratio is small, the thermal stability is not lowered even after a long term elapsed so that the automatic igniting function is not lost.

## Claims

1. A gas generator wherein a gas generating agent maintains an automatic igniting function even after the gas generating agent has been kept at 105°C for 400 hours, and said gas generating agent has a composition comprising at least:
• guanidine nitrate or nitroguanidine as a fuel, and
• a basic copper nitrate.

2. A gas generator according to claim 1, wherein the gas generating agent has a low ignition temperature.

3. A gas generator according to any one of claims 1 and 2, wherein the gas generating agent has an ignition temperature of 200°C or lower.

4. A gas generator according to any one of claims 1 to 3, wherein an enhancer agent which does not have an automatic ignition function, is further used.

5. A gas generator according to any of Claims 1-4, wherein the gas generating agent further comprises an additive.

6. A gas generating agent which maintains an automatic igniting function even after the gas generating agent has been kept at 105°C for 400 hours, and said gas generating agent has a composition comprising at least:
• guanidine nitrate or nitroguanidine as a fuel, and
• a basic copper nitrate.

7. A gas generating agent according to claim 6, wherein the gas generating agent has a low ignition temperature.

8. A gas generating agent according to claim 6 or 7, wherein the gas generating agent has an ignition temperature of 200°C or lower.

9. A gas generating agent according to any of Claims 6-8, wherein the gas generating agent further comprises an additive.

10. Use of the gas generating agent according to claim 6 for a gas generator.

## Patentansprüche

1. Gasgenerator, bei dem ein Gaserzeugungsmittel eine automatische Zündfunktion auch dann beibehält, wenn das Gaserzeugungsmittel über 400 Stunden auf 105°C gehalten worden ist und das Gaserzeugungsmittel eine Zusammensetzung hat, die wenigstens umfasst:
• Guanidin-Nitrat oder Nitroguanidin als einen Brennstoff, und
• ein basisches Kupfernitrat.

2. Gasgenerator nach Anspruch 1, wobei das Gaserzeugungsmittel eine niedrige Zündtemperatur hat.

3. Gasgenerator nach einem der Ansprüche 1 und 2, wobei das Gaserzeugungsmittel eine Zündtemperatur von 200°C oder darunter hat.

4. Gasgenerator nach einem der Ansprüche 1 bis 3, wobei des Weiteren ein Verstärkungsmittel, das keine automatische Zündfunktion hat, verwendet wird.

5. Gasgenerator nach einem der Ansprüche 1-4, wobei das Gaserzeugungsmittel des Weiteren einen Zusatzstoff umfasst.

6. Gaserzeugungsmittel, das auch dann, wenn das Gaserzeugungsmittel über 400 Stunden auf 105°C gehalten worden ist, eine automatische Zündfunktion beibehält, wobei das Gaserzeugungsmittel eine Zusammensetzung hat, die wenigstens umfasst:
• Guanidin-Nnitrat oder Nitroguanidin als einen Brennstoff, und
• ein basisches Kupfernitrat.

7. Gaserzeugungsmittel nach Anspruch 6, wobei das Gaserzeugungsmittel eine niedrige Zündtemperatur hat.

8. Gaserzeugungsmittel nach Anspruch 6 oder 7, wobei das Gaserzeugungsmittel eine Zündtemperatur von 200°C oder darunter hat.

9. Gaserzeugungsmittel nach einem der Ansprüche 6-8, wobei das Gaserzeugungsmittel des Weiteren einen Zusatzstoff umfasst.

10. Verwendung des Gaserzeugungsmittels nach Anspruch 6 für einen Gasgenerator.

## Revendications

1. Générateur de gaz dans lequel un agent générateur de gaz maintient une fonction d'allumage automatique même après que l'agent générateur de gaz ait été maintenu à 105°C pendant 400 heures, et ledit agent générateur de gaz a une composition comprenant au moins :
• du nitrate de guanidine ou de la nitroguanidine en tant que combustible, et
• du nitrate de cuivre basique.

2. Générateur de gaz selon la revendication 1, dans lequel l'agent générateur de gaz a une température d'allumage basse.

3. Générateur de gaz selon la revendication 1 ou 2, dans lequel l'agent générateur de gaz a une température d'allumage de 200°C ou inférieure.

4. Générateur de gaz selon l'une quelconque des revendications 1 à 3, dans lequel un agent amplificateur qui n'a pas une fonction d'allumage automatique est en outre utilisé.

5. Générateur de gaz selon l'une quelconque des revendications 1 à 4, dans lequel l'agent générateur de gaz comporte en outre un additif.

6. Agent générateur de gaz qui maintient une fonction d'allumage automatique même après que l'agent générateur de gaz ait été maintenu à 105°C pendant 400 heures, et ledit agent générateur de gaz a une composition comprenant au moins :
• du nitrate de guanidine ou de la nitroguanidine en tant que combustible, et
• du nitrate de cuivre basique.

7. Agent générateur de gaz selon la revendication 6, dans lequel l'agent générateur de gaz a une température d'allumage basse.

8. Agent générateur de gaz selon la revendication 6 ou 7, dans lequel l'agent générateur de gaz a une température d'allumage de 200°C ou inférieure.

9. Agent générateur de gaz selon l'une quelconque des revendications 6 à 8, dans lequel l'agent générateur de gaz comprend en outre un additif.

10. Utilisation de l'agent générateur de gaz selon la revendication 6 pour un générateur de gaz.
